Europäisches Patentamt

European Patent Office

Office européen des brevets

(11) Veröffentlichungsnummer: **0 285 804**
**A1**

## (12) EUROPÄISCHE PATENTANMELDUNG

(21) Anmeldenummer: **88103110.8**

(22) Anmeldetag: **02.03.88**

(51) Int. Cl.⁴ **F16L 59/04 , F01N 7/16**

(30) Priorität: **10.04.87 DE 3712193**

(43) Veröffentlichungstag der Anmeldung:
**12.10.88 Patentblatt 88/41**

(84) Benannte Vertragsstaaten:
**DE ES FR GB IT SE**

(71) Anmelder: **Leistritz Aktiengesellschaft**
**Markgrafenstrasse 29-39**
**D-8500 Nürnberg(DE)**

(72) Erfinder: **Ermer, Hermann, Dipl.-Ing. (FH)**
**Thäterstrasse 46**
**D-8500 Nürnberg(DE)**
Erfinder: **Zachmann, Alfons**
**Dr.-Konrad-Adenauer-Strasse 31**
**D-8510 Fürth(DE)**
Erfinder: **Boeck, Rudolf, Dr.**
**Schonhoverstrasse 20**
**D-8500 Nürnberg 10(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) **Emissionsgeschütztes Mantelrohr.**

(57) Emissionsgeschütztes, mit Krümmungen versehenes Mantelrohr für Abgasschalldämpferanlagen,
wobei der Raum zwischen Außenrohr und Innenrohr
mit Keramikpulver oder einem Gewebe bzw. Gestrick aus Keramikfasern ausgefüllt ist und Verfahren
zu seiner Herstellung.

FIG. 1

## Emissionsgeschütztes Mantellrohr

Die Erfindung bezieht sich auf ein emissionsgeschütztes, mit Krümmungen versehenes Mantelrohr für Abgasschalldämpferanlagen.

Gerade bei Abgasschalldämpferanlagen besteht - nachdem es inzwischen weitgehend gelungen ist, die im Gas vorhandene Schallenergie innerhalb der Schalldämpfer zu reduzieren - die Schwierigkeit, auch den Körperschall, d.h. die Körperschallweiterleitung innerhalb der Mantelrohre und die Sekundärabstrahlung, d.h. die Abstrahlung von Schall unmittelbar vom Gehäuse oder Rohr an die Umgebungsluft, abzusenken.

Darüber hinaus besteht grundsätzlich bei allen Abgasschalldämpferanlagen auch das Problem, eine zu starke Wärmeabfuhr durch die Rohre zu vermeiden, insbesondere bei Motorraumkapselungen, wobei dies im Zusammenhang mit Mantelrohren auch deshalb von Bedeutung ist, da man versucht, wenigstens für die Außenrohre einfachere billigere Stähle verwenden zu können, die allerdings nicht so hochtemperaturfest sind. Es sollte daher möglichst auch die Wärmeleitung radial zum Mantelrohr niedriggehalten werden.

Zur Wärmeisolierung eines derartigen Mantelrohrs ist in der Deutschen Patentschrift DE 28 24 906 C2 bereits vorgeschlagen worden, zwischen den beiden Rohren eine Schaumstoffschicht vorzusehen, die im bekannten Weg des Ausschäumens zwischen die Rohre eingebracht wird. Derartige ausgeschäumte Mantelrohre sind jedoch nur für den in dieser Patentschrift genannten Einsatzzweck für Fernwärmeleitungen geeignet, nicht aber für Abgasschalldämpferanlagen, da dort erheblich höhere Temperaturen auftreten, denen Kunststoffschäume in den meisten Fällen nicht gewachsen sind. In den Fällen, in denen die Temperaturfestigkeit gegeben ist, sind derartige Kunststoffschäume viel zu unelastisch, so daß bei den erheblichen Erschütterungen im Betrieb, insbesondere den ständigen starken Temperaturwechseln und den daraus resultierenden Verwerfungen, der Kunststoffschaum mechanisch zerstört würde.

Diese Gefahr einer Zerstörung vermeidet ein emissionsgeschütztes, in der Deutschen Offenlegungsschrift 34 32 744 vorgeschlagenes Mantelrohr, bei dem dem Außen-und Innenrohr ein in radialer Richtung drucksteifer, axial nur eine geringe Schubsteifigkeit aufweisender Metallgewebeschlauch zwischengeordnet ist. Die Verwendung eines derartigen Metallgewebeschlauchs ist zwar auf eine gute Körperschall-aber nicht auf eine hohe Wärmedämmung ausgelegt.

Der vorliegenden Erfindung liegt die Aufgabe zugrunde, ein emissionsgeschütztes Mantelrohr zu schaffen, welches neben einer erhöhten Schalldämpfung auch eine erhöhte Wärmeisolierung aufweist und in einfacher Weise mit Krümmungen versehen werden kann , so daß es vornehmlich für Abgasschalldämpferanlagen Einsatz finden kann.

Zur Lösung dieser Aufgabe ist erfindungsgemäß vorgesehen, daß der Raum zwischen Außen-und Innenrohr des Mantelrohrs mit Mineralpulver oder einem temperaturfesten, körperschallreduzierendem Gewebe bzw. Gestrick geringer Wärmeleitfähigkeit ausgefüllt ist.

Der vorliegenden Erfindung zugrundeliegende Versuche haben gezeigt, daß neben einer erhöhten Wärmedämmung durch die Mineralfüllung, wobei bei Verwendung eines Gewebes oder Gestricks Aluminiumsilikatfasern od.dergl. eingesetzt werden, eine sehr gute zusätzliche Schalldämpfung gegenüber Mantelrohren erzielt wird, bei denen der Raum zwischen Innen-und Außenrohr leer bleibt.

Bei Verwendung eines Gewebes oder Gestricks aus Mineralfasern, d.h. beim Einsatz sog. Fasermatten zur Ausfüllung des Raums zwischen Innen-und Außenrohr des Mantelrohrs, wird zunächst das Innenrohr mit der Mineralfasermatte ummantelt und anschließend das Außenrohr aufgebracht und erst dann erfolgt die Biegung des Mantelrohrs in die gewünschte Form, wobei die Mineralfasermatte als Zwischenlage einen ansonsten notwendigen Hohldorn beim Biegen des Mantelrohrs ersetzt.

Verwendet man dagegen Mineralpulver, so ist es grundsätzlich möglich, das Pulver sowohl vor dem Biegen, als auch nach dem Biegen des Mantelrohrs durch eine Einfüllöffnung einzufüllen und die Einfüllöffnung anschließend zu verschließen. Das Einbringen vor dem Biegen hat wiederum den Vorteil, daß die Verwendung eines Hohldorns entfällt.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:

Fig. 1 einen Schnitt durch ein mit Mineralpulver gefülltes Mantelrohr vor und

Fig. 2 das in Fig. 1 gezeigte Mantelrohr nach der Biegung und

Fig. 3 ein noch unverformtes Mantelrohr mit einer Lage eines Gewebes bzw. Gestricks aus Mineralfasern zwischen Innen-und Außenrohr.

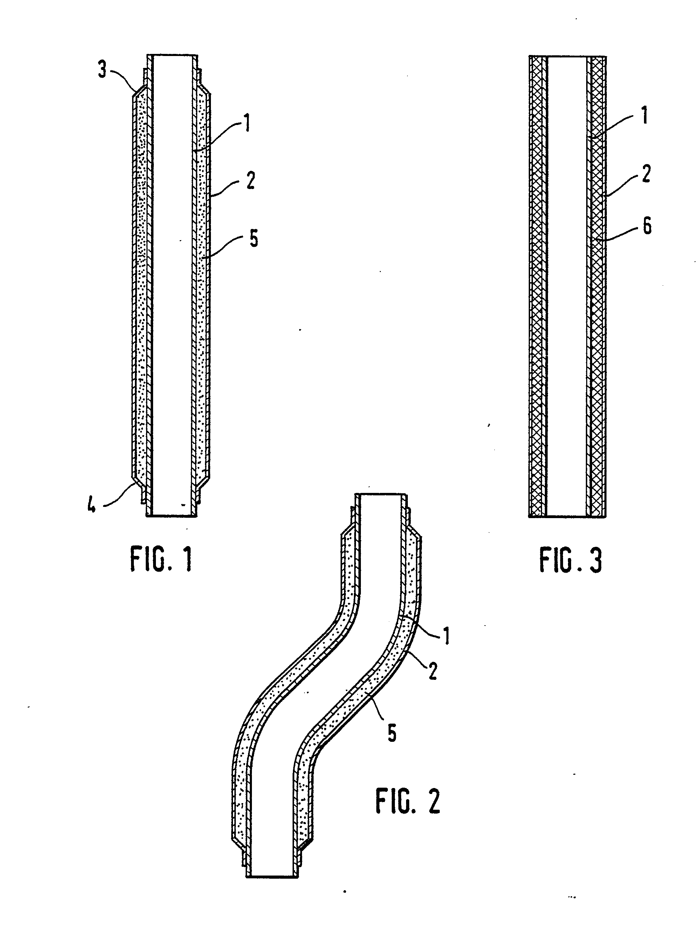

Das in Fig. 1 gezeigte Mantelrohr besteht aus dem Innenrohr 1, welches aus einem temperaturfesteren Stahl gegenüber dem Außenrohr 2 besteht. Das Außenrohr ist an seinen eingezogenen Enden 3 bzw. 4 mit dem Innenrohr gasdicht verbunden.

Der Raum zwischen dem Innenrohr 1 und dem Außenrohr 2 ist mit einem Mineralpulver 5 ausgefüllt, wobei dieses Pulver durch eine nicht gezeigte Öffnung in den Zwischenraum eingebracht werden kann, die nachträglich wieder verschlosssen wird.

Statt dessen kann das Einfüllen auch erfolgen ehe beispielsweise die obere Verbindung zwischen Innen-und Außenrohr hergestellt wird. Nach dem Einfüllen des Mineralpulvers 5 wird das Rohr in die schematisch in Fig. 2 dargestellte gekrümmte Form gebogen, wobei das Pulver die Verwendung eines ansonsten bei Mantelrohren notwendigen Hohldorns während des Biegens ersetzt. Selbstverständlich könnte auch zunächst ein mit Krümmungen versehenes Mantelrohr gem. Fig. 2 hergestellt werden, und zwar unter Verwendung eines Hohldorns, um erst nachträglich das Mineralpulver einzufüllen, doch ist die erstgenannte Fertigungsart ohne Verwendung von Hohldornen im allgemeinen vorzuziehen, da sie verfahrensmäßig einfacher ist.

Die Fig. 3 zeigt ein Mantelrohr, bei welchem zwischen dem Innenrohr 1 und dem Außenrohr 2 ein Gewebe bzw. Gestrick 6 aus temperaturfesten Faserstoffen angeordnet ist. Dieses in Form einer Matte vorliegende Gewebe bzw. Gestrick wird zunächst um das Innenrohr gelegt und vorzugsweise durch Verkleben auf diesem fixiert, ehe das Außenrohr aufgeschoben wird. Zum leichteren Aufschieben kann dabei die elastisch zusammendrückbare Matte aus Faserstoffen durch einen vorlaufenden Trichter des Außenrohrs zusammengedrückt werden, so daß auch ohne vorherige Erweiterung des Außenrohres, beispielsweise durch stärkere Erwärmung, ein Überschieben des Außenrohrs möglich ist. Innenrohr 1 und Außenrohr 2 sind vor dem Biegen zumindest einseitig form- oder kraftschl,üssig miteinander zu verbinden.

## Ansprüche

1. Emissionsgeschütztes, mit Krümmungen versehenes Mantelrohr für Abgasschalldämpferanlagen, dadurch gekennzeichnet, daß der Raum zwischen Außenrohr (2) und Innenrohr (1) mit oxidischem oder nicht-oxidischem Mineralpulver (5), respektive mit einem temperaturfesten und körperschallreduzierenden Gewebe bzw. Gestrick geringer Wärmeleitfähigkeit ausgefüllt ist.

2. Emissionsgeschütztes Mantelrohr nach Anspruch 1, gekennzeichnet durch ein Gewebe oder Gestrick (6), das vorzugsweise aus Aluminiumsilikat oder SiO$_2$-Fasern besteht.

3. Verfahren zur Herstellung eines emissionsgeschützten Mantelrohres nach Anspruch 1 oder 2, dadurch gekennzeichnet, daß das Mantelrohr mit Hilfe eines Hohldornes gebogen und anschließend durch eine Einfüllöffnung das Mineralpulver eingebracht und die Einfüllöffnung verschlossen wird.

4. Verfahren zur Herstellung eines emissionsgeschützten Mantelrohres nach Anspruch 1 oder 2, dadurch gekennzeichnet, daß der Füllstoff zwischen Innenrohr (1) und Außenrohr (2) - Mineralpulver oder Gewebe bzw. Gestrick - vor dem Biegen eingebracht und die Biegungen am Mantelrohr mit oder ohne Innendorn durchgeführt werden.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 404 771 (PORSCHE AG) <br> * insgesamt * <br> --- | 1,2,4 | F 16 L 59/04 <br> F 01 N 7/16 |
| A | US-A-3 988 161 (Y. KANEKO et al.) <br> * Zusammenfassung; Figur 1; Spalte 1, Zeilen 6-27,60-68; Ansprüche * <br> --- | 1,2 | |
| A | DE-A-2 746 180 (W. OPPERMANN) <br> * Ansprüche 1,4 * <br> --- | 1,3 | |
| A | GB-A-2 166 512 (EUROSIL LTD.) <br> * Zusammenfassung; Figur 1 * <br> --- | 1 | |
| A | US-A-4 041 199 (J.E. CARTWRIGHT) <br> --- | | |
| A | EP-A-0 047 527 (NIPPON STEEL CORP.) <br> ----- | | |

RECHERCHIERTE SACHGEBIETE (Int. Cl.4)

F 16 L 59/00
F 01 N 7/00

Der vorliegende Recherchenbericht wurde für alle Patentansprüche erstellt

| Recherchenort | Abschlußdatum der Recherche | Prüfer |
|---|---|---|
| BERLIN | 07-06-1988 | SCHAEFFLER C.A.A. |